# FASCICULE DE BREVET EUROPEEN

(11) **EP 0 640 504 B1**
(45) Date de publication et mention de la délivrance du brevet: **25.09.1996**
(21) Numéro de dépôt: 94460031.1
(22) Date de dépôt: 24.08.1994
(51) Int. Cl.: B60J 5/04

(54) **Renfort de porte pour véhicule automobile**
Türverstärkung für Kraftfahrzeug
Door with reinforcement for motor vehicle

(30) Priorité: 31.08.1993 FR 9310548
(43) Date de publication de la demande: 01.03.1995
(73) Titulaire: AUTOMOBILES PEUGEOT, 75116 Paris (FR); AUTOMOBILES CITROEN, 92200 Neuilly sur Seine (FR)
(72) Inventeur: Faidy, Jean-Pierre, F-92410 Ville d'Avray (FR); Froumajou, Armand, F-95110 Sannois (FR)
(74) Mandataire: Le Faou, Daniel

(56) Documents cités:
- EP-A- 0 472 284
- DE-U- 9 206 926
- DE-U- 9 302 344
- GB-A- 1 391 780
- US-A- 5 094 034

## Description

La présente invention concerne un renfort de porte pour véhicule automobile.

Il est connu de disposer à l'intérieur des portes des véhicules automobiles des armatures, généralement des barres tubulaires, qui sont destinées à s'opposer à l'intrusion en cas de choc latéral, notamment dû à une collision.

Ces renforts donnent généralement satisfaction sur ce plan, car ils augmentent très sensiblement la résistance mécanique des portes à la flexion, et en particulier à la flexion vers l'intérieur du véhicule.

Cependant, en cas de collision frontale, les armatures ont tendance à agir comme des entretoises sur le véhicule déformé et à bloquer l'ouverture de la porte, suite à la mise en appui de leurs extrémités, voire à leur encastrement, dans l'entrée de la porte. L'ouverture de la porte est alors rendue délicate et laborieuse, en tout cas inacceptable pour une intervention rapide des secours.

Le document DE-U-93 02344 a pour objet un renfort de porte constitué d'éléments télescopiques, ce qui permet d'en faciliter le montage en s'affranchissant des différences de largeur de porte d'un modèle à l'autre. Toutefois, il est prévu (cf. page 3, début du deuxième paragraphe) de fixer ces éléments les uns aux autres, si bien qu'après le montage, l'ensemble se comporte de la même manière qu'une barre d'un seul tenant.

Ce renfort connu ne permet donc pas de pallier le problème mentionné ci-dessus.

L'invention a pour objectif de résoudre ce problème en proposant un renfort de porte qui n'engendre pas ce phénomène d'entretoisement en choc frontal, tout en conservant sa fonction de protection en choc latéral.

Comme les dispositifs connus, un renfort de porte selon l'invention consiste en une armature allongée qui est logée à l'intérieur de la porte et relie des éléments structurels avant et arrière de celle-ci.

Conformément à l'invention, cette armature possède une résistance faible, voire nulle, à la compression axiale résultant d'un choc frontal, tandis qu'elle possède une résistance élevée à la flexion vers l'intérieur du véhicule, flexion résultant d'un choc latéral.

Dans un mode de réalisation préférentiel, l'armature est une barre télescopique qui est constituée de deux parties telles que des tubes, par exemple cylindriques, aptes à coulisser l'un dans l'autre.

Par ailleurs, selon une autre caractéristique avantageuse, cette barre télescopique est pourvue de moyens formant butée qui la rendent inextensible.

Dans un mode de réalisation possible, ces moyens consistent en des tétons périphériques solidaires du tube intérieur et qui s'engagent dans des lumières longitudinales ménagées dans la paroi du tube extérieur.

Dans ce cas, il est possible de prévoir que les tétons et les lumières soient positionnés seulement du côté de l'espace intérieur du véhicule. De préférence, la portion du tube intérieur qui pénètre dans le tube extérieur a une longueur sensiblement plus grande que la longueur des lumières.

Dans un autre mode de réalisation possible, ces moyens formant butée sont constitués par une zone d'épanouissement du tube intérieur, apte à venir en appui contre une zone de rétreint du tube extérieur.

Selon une autre caractéristique de l'invention, les tubes intérieur et extérieur sont tous deux maintenus centrés l'un par rapport à l'autre par une portée relativement longue (sensiblement plus grande que les dimensions transversales de la section des tubes) ou par deux portées qui sont espacées l'une de l'autre.

D'autres caractéristiques et avantages de l'invention apparaîtront de la description et des dessins annexés, qui en représentent des modes de réalisation préférentiels.

Sur ces dessins :
- la figure 1 est une vue en perspective, avec arrachement partiel, montrant l'implantation d'un premier mode de réalisation possible du renfort à l'intérieur d'une porte de véhicule automobile, seuls certains éléments structurels de celle-ci ayant été représentés ;
- la figure 2 est une vue en coupe transversale de la barre télescopique constitutive de ce renfort de porte, le plan de coupe référencé II-II à la figure 3 passant par les tétons périphériques ;
- la figure 3 est une vue de dessus, en coupe longitudinale selon le plan III-III de la figure 2, et à plus petite échelle, de ce même renfort ;
- la figure 3A est une vue similaire à la figure 3, montrant la déformation du renfort en cas de choc frontal ;
- la figure 4 est une vue en coupe longitudinale d'un second mode de réalisation possible du renfort de porte ;
- la figure 4A est une vue similaire à la figure 4, qui montre la déformation de ce renfort sous l'action d'un choc frontal ;
- les figures 5 et 6 sont des vues de détail, toujours en coupe axiale, de deux variantes de réalisation du renfort de la figure 4.

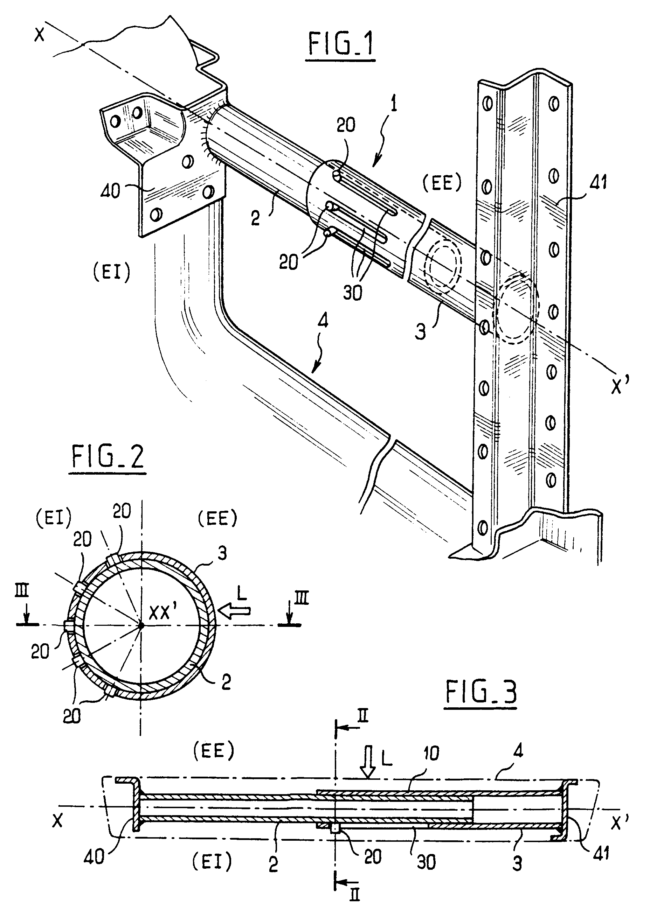

A la figure 1 est représenté un renfort de porte 1 constitué par une barre télescopique formée d'un tube intérieur 2 qui s'emboîte partiellement dans un tube extérieur 3, et peut coulisser dans celui-ci.

La référence 4 correspond à la porte d'un véhicule dont seule l'ossature a été partiellement représentée à la figure 1. Le renfort 1 est logé à l'intérieur de la porte et n'est donc pas visible, en réalité, sur le véhicule monté et fini.

L'axe de la barre télescopique 1, référencé XX', est un axe horizontal longitudinal, c'est-à-dire parallèle à la direction longitudinale du véhicule.

Les extrémités avant et arrière de la barre sont fixées, par exemple par soudage, à des éléments métalliques tels qu'un gousset 40 et une cornière 41. Ces éléments sont eux-mêmes fixés, par exemple au moyen de vis non représentées, dans les montants latéraux (avant et arrière) de l'ossature de la porte.

Si on considère la vue de la figure 1, l'espace intérieur EI du véhicule se trouve en avant de la barre 1, c'est-à-dire du côté de l'observateur, tandis que l'espace extérieur EE se trouve à l'arrière de cette barre.

Les tubes 2 et 3 sont des tubes cylindriques.

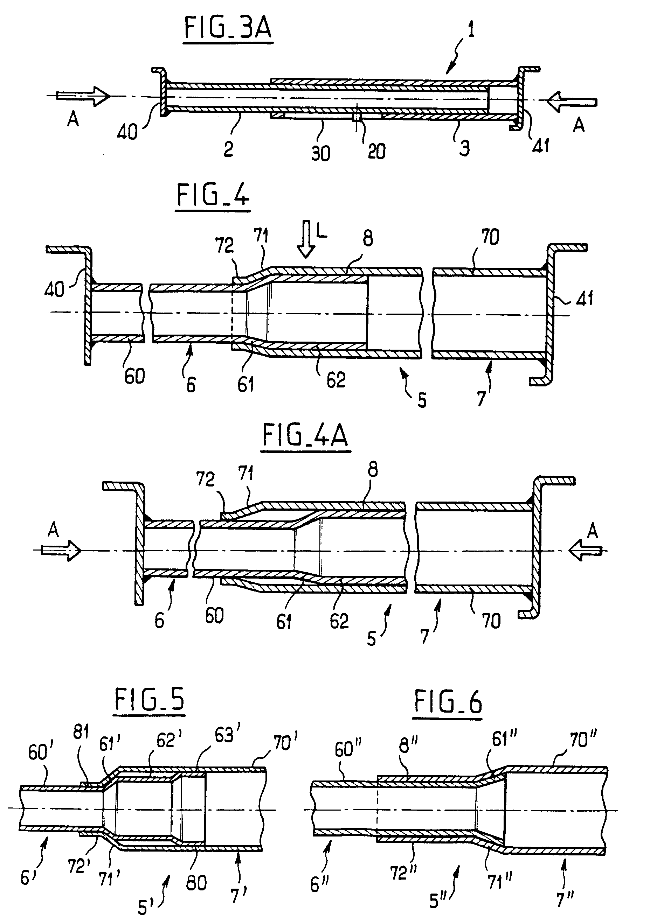

Ils sont maintenus centrés l'un par rapport à l'autre par une portée, référencée 10 à la figure 3, qui est relativement grande par rapport à leur diamètre.

Au niveau de cette zone d'emboîtement, le tube intérieur 2 est garni à sa périphérie de plusieurs tétons cylindriques 20 disposés radialement. Ceux-ci sont par exemple fixés par vissage à la paroi du tube 2.

Les tétons sont par exemple au nombre de cinq, disposés dans un même plan transversal (perpendiculaire à l'axe XX'). Ils sont positionnés seulement du côté de l'espace intérieur EI, et sont angulairement espacés de manière régulière (voir la figure 2).

Du côté de l'espace extérieur EE, le tube 2 est dépourvu de téton.

Chaque téton 20 s'engage avec un faible jeu dans une lumière allongée 30 à bords parallèles, qui traverse la paroi du tube extérieur 3.

Les lumières 30 s'étendent suivant les génératrices du tube 3, c'est-à-dire parallèlement à l'axe XX'.

La longueur des lumières est plus faible que la longueur d'emboîtement mutuel des tubes 2 et 3.

Les positionnements des tétons sur le tube 2 et des lumières sur le tube 3 sont tels qu'en position normale, c'est-à-dire après montage du renfort dans la porte du véhicule, chaque téton 20 vient en appui contre le bord d'extrémité externe de la lumière 30 (c'est-à-dire du côté de l'embouchure du tube 3).

De préférence, les bords d'extrémité des lumières 30 sont semi-circulaires, de sorte que chaque téton vient correctement porter, par une demi-circonférence, contre le bord d'extrémité de la lumière.

La barre télescopique 1 est par conséquent inextensible. Par contre, elle est parfaitement rétractable, le tube 2 pouvant s'enfoncer librement à l'intérieur du tube 3, sur une course qui correspond à la longueur des lumières.

Aux figures 2 et 3, on a symbolisé par la flèche L un choc latéral qui s'exerce contre la porte 4 (représentée en traits interrompus mixtes à la figure 3). Ce choc, qui est par exemple dû à une collision avec un autre véhicule, est naturellement dirigé de l'extérieur vers l'intérieur du véhicule.

Le rôle du renfort de porte est de limiter l'intrusion à l'intérieur de l'habitacle en améliorant la résistance de la porte à la déformation vers l'intérieur, sous l'effet de ce choc latéral L.

On comprend, à la simple observation de la figure 3, que l'effort L tend à faire fléchir la barre 1 dans sa partie centrale, et cette sollicitation tend à désemboîter le tube 2 du tube 3. Cependant, du fait que les tétons 20 sont en appui contre le fond des lumières 30, ce désemboîtement n'est pas possible et la barre télescopique 1 se comporte dès le début du choc comme une barre monobloc. Le renfort est donc capable de supporter un effort de poussée transversal important. Lorsque cet effort augmente encore et provoque le fléchissement de la barre, celle-ci agit comme un chaînage, travaillant alors en traction depuis ses deux extrémités. Celles-ci étant fixées aux bords de la porte, l'effort est transmis à l'entrée de porte par l'intermédiaire de la charnière et de la serrure (non représentée).

Cette barre de renfort remplit donc correctement sa fonction, de la même façon qu'une barre de renfort traditionnelle.

Dans le cas d'un choc frontal du véhicule, qui est symbolisé par les flèches A à la figure 3A, on observe un enfoncement libre du tube intérieur 2 dans le tube extérieur 3, et par conséquent un raccourcissement de la barre de renfort 1. En effet, la barre présente une résistance nulle (aux frottements près) à la compression axiale. On évite ainsi le problème d'entretoisement qui a été rappelé plus haut, si bien qu'après le choc, la présence de la barre de renfort ne contrarie normalement pas l'ouverture de la porte.

Comme déjà dit, la longueur minimale des lumières est définie par le déplacement que l'on veut autoriser pour ne pas obtenir cet entretoisement. Il est possible d'augmenter encore cette longueur afin que cette zone possède la même souplesse de déformation que le reste de la barre, malgré le recouvrement de parois des deux tubes (qui crée un surcroît de rigidité).

Il va de soi que le nombre de tétons et de lumières est variable. Ils doivent être localisés essentiellement sur la périphérie intérieure de la barre de renfort pour reprendre les efforts de tension. Il serait cependant possible d'en prévoir également du côté extérieur, vers l'espace EE.

Dans le second mode de réalisation représenté aux figures 4 et 4A, la barre de renfort est également une barre télescopique, référencée 5.

Cette barre est composée de deux tubes de forme générale cylindrique, l'un intérieur 6 et l'autre extérieur 7, dont les extrémités libres sont fixées respectivement aux éléments structurels 40 et 41.

Le tube 6 possède une partie principale 60 qui s'étend en dehors du tube 7 et une partie élargie 62, de plus grand diamètre, qui pénètre à l'intérieur du tube 7.

Les parties 60 et 62 se raccordent par une zone d'épanouissement tronconique 61.

La partie 62 est centrée par la paroi interne du tube extérieur 7, sur une portée 8 dont la longueur est sensiblement plus grande que le diamètre des tubes, ce qui améliore la qualité du guidage et réduit les risques de coincement.

Le tube 7 est composé d'une partie principale 70 de diamètre constant, à l'intérieur de laquelle s'insère la partie élargie 62 du tube 60. L'extrémité du tube 7 présente une portion 72 de plus petit diamètre qui se raccorde à la partie 70 par une zone de rétreint tronconique 71.

Les zones de transition 61 et 71 ont le même angle au sommet, de sorte qu'elles peuvent venir correctement en appui l'une contre l'autre lorsque la barre est dans son état normal, c'est-à-dire montée à l'intérieur de la porte du véhicule.

C'est cet état qui est illustré à la figure 4.

Sur cette même figure, on a symbolisé, comme précédemment, un choc latéral par une flèche L.

Sous l'application de cet effort latéral, la barre se comporte comme une barre monobloc, l'appui mutuel des parties 61 et 71 jouant le rôle de butée qui empêche l'extension de la barre c'est-à-dire le désemboîtement du tube 6 par rapport au tube 7.

En revanche, en cas de choc frontal, symbolisé par les flèches A à la figure 4A, le tube 6 peut pénétrer à l'intérieur du tube 7, comme cela est illustré par cette figure.

Dans la première variante de la figure 5 où la barre de renfort est référencée 5', le tube intérieur 6' présente un double épanouissement à son extrémité qui s'emboîte dans le tube extérieur 7'.

Un premier élargissement 62' se raccorde par une zone tronconique 61' à la partie principale 60' du tube. La partie 62' présente elle-même une partie d'extrémité élargie 63'.

C'est cette partie qui vient s'appliquer, par une portée 80, contre la paroi intérieure de la portion 70' du tube extérieur.

La partie d'extrémité 72' de plus petit diamètre du tube 7' vient s'appliquer, par sa paroi intérieure, contre la paroi extérieure de la portion 60' du tube 6', ce qui réalise une seconde zone de guidage et de centrage.

Les zones 81 et 80, relativement courtes, mais espacées l'une de l'autre, assurent par conséquent un guidage mutuel correct des deux tubes, ce qui est équivalent à une portée unique et longue.

Comme dans la réalisation de la figure 4, les zones d'épanouissement 61' et 71' des deux tubes servent de butées qui rendent la barre 5' inextensible.

Dans la seconde variante de la figure 6, le tube intérieur 6'' possède une partie principale cylindrique 60'' dont l'extrémité se présente sous la forme d'un évasement tronconique 61''.

Le tube extérieur 7'' possède une partie principale 70'' qui se raccorde à une portion d'extrémité 72'' par une zone tronconique 71''.

Le centrage des deux tubes se fait par une portée 8'' qui correspond à la zone de contact de la partie 72'' avec la partie 60''.

Les zones tronconiques 61'' et 71'' constituent les butées qui rendent cette barre télescopique 5'' inextensible.

Le caractère télescopique d'une barre de renfort selon l'invention présente également de l'intérêt sur le plan du montage. En effet, lors de la mise en place de la barre dans la porte du véhicule, il peut être utile de la raccourcir, par exemple pour l'introduire par une ouverture du panneau intérieur. On peut ensuite la positionner correctement, la rallonger pour qu'elle vienne en appui contre les deux bords opposés de la porte, et la fixer.

L'armature de renfort selon l'invention n'est pas forcément une barre télescopique. Elle pourrait être constituée de deux éléments reliés par une partie facilement déformable ou frangible en compression longitudinale, l'ensemble ayant néanmoins une résistance élevée en flexion latérale.

## Revendications

1. Renfort de porte pour véhicule automobile, qui consiste en une armature allongée (1 ; 5) logée à l'intérieur de la porte (4) et reliant des éléments structurels avant et arrière (40, 41) de celle-ci, caractérisé par le fait que ladite armature (1 ; 5) possède une résistance faible, voire nulle, à la compression axiale résultant d'un choc frontal (A), tandis qu'elle possède une résistance élevée à la flexion vers l'intérieur du véhicule, résultant d'un choc latéral (L).

2. Renfort de porte selon la revendication 1, caractérisé par le fait que ladite armature (1 ; 5) est une barre télescopique, constituée de deux parties telles que des tubes (2, 3 ; 6, 7) aptes à coulisser l'un dans l'autre.

3. Renfort de porte selon la revendication 2, caractérisé par le fait que ladite barre télescopique (1 ; 5) est pourvue de moyens formant butée, qui la rendent inextensible.

4. Renfort de porte selon la revendication 3, caractérisé par le fait que lesdits moyens consistent en des tétons périphériques (20) solidaires du tube intérieur (2) et qui s'engagent dans des lumières longitudinales (30) ménagées dans le tube extérieur (3).

5. Renfort de porte selon la revendication 4, caractérisé par le fait que les tétons (20) et les lumières (30) sont positionnés du côté de l'espace intérieur (EI) du véhicule.

6. Renfort de porte selon la revendication 3 ou 4, caractérisé par le fait que la portion du tube intérieur (2) qui pénètre dans le tube extérieur (3) a une longueur plus grande que celle des lumières (30).

7. Renfort selon la revendication 3, caractérisé par le fait que lesdits moyens formant butée sont constitués par une zone d'épanouissement (61) du tube intérieur (6), apte à venir en appui contre une zone de rétreint (71) du tube extérieur (7).

8. Renfort selon l'une des revendications 2 à 7, caractérisé par le fait que les tubes intérieur (2) et extérieur (3) sont maintenus centrés l'un par rapport à l'autre par une portée (10 ; 8 ; 8'') relativement longue, ou par deux portées (80, 81) espacées l'une de l'autre.

## Claims

1. Door reinforcement for a motor vehicle, which consists in an elongate armature (1;5) housed within the door (4) and linking front and rear structural elements (40, 41) thereof, characterized in that the said armature (1;5) has little or even no strength in axial compression resulting from a frontal impact (A), whereas it has high strength in bending towards the interior of the vehicle, resulting from a side impact (L).

2. Door reinforcement according to Claim 1, characterized in that the said armature (1;5) is a telescopic bar made up of two parts such as tubes (2, 3; 6, 7) able to slide one inside the other.

3. Door reinforcement according to Claim 2, characterized in that the said telescopic bar (1;5) is provided with means forming a stop, which prevent it from being extended.

4. Door reinforcement according to Claim 3, characterized in that the said means consist in peripheral pegs (20) secured to the inner tube (2) and which engage in longitudinal slots (30) made in the outer tube (3).

5. Door reinforcement according to Claim 4, characterized in that the pegs (20) and the slots (30) are positioned on the side facing the interior space (EI) of the vehicle.

6. Door reinforcement according to Claim 3 or 4, characterized in that the portion of the inner tube (2) that enters the outer tube (3) is longer than the slots (30).

7. Reinforcement according to Claim 3, characterized in that the said means forming a stop consist of a flared region (61) of the inner tube (6), able to come to bear against a narrowed region (71) of the outer tube (7).

8. Reinforcement according to one of Claims 2 to 7, characterized in that the inner tube (2) and outer tube (3) are kept centred one with respect to the other by one relatively long bearing surface (10; 8; 8'') or by two bearing surfaces (80, 81) spaced apart.

## Patentansprüche

1. Türverstärkung für ein Kraftfahrzeug, welche aus einer länglichen Bewehrung (1; 5) besteht, die an der Innenseite der Tür (4) angebracht ist und vordere und hintere Strukturelemente (40, 41) dieser Tür miteinander verbindet,
**dadurch gekennzeichnet**, **daß**
diese Bewehrung (1; 5) einen geringen Widerstand, der sogar bei Null liegen kann, gegen eine axiale Kompression besitzt, welche durch einen frontalen Aufprall (A) verursacht wird, und dadurch, daß sie einen hohen Widerstand gegen eine Durchbiegung in das Innere des Kraftfahrzeuges besitzt, welche durch einen seitlichen Aufprall (B) verursacht werden kann.

2. Türverstärkung nach Anspruch 1,
**dadurch gekennzeichnet**, **daß**
diese Bewehrung (1; 5) aus einer teleskopischen Stange besteht, welche aus zwei zum Beispiel rohrförmigen Teilen (2, 3; 6, 7) besteht, welche ineinander gleiten können.

3. Türverstärkung nach Anspruch 2,
**dadurch gekennzeichnet**, **daß**
diese teleskopische Stange (1; 5) mit Mitteln ausgerüstet ist, welche einen Anschlag bilden, der ihre weitere Ausdehnung verhindert.

4. Türverstärkung nach Anspruch 3,
**dadurch gekennzeichnet**, **daß**
diese Mittel aus peripheren Zapfen (20) bestehen, welche mit dem inneren Rohr (2) fest verbunden sind, und die in Langlöcher (30) eingreifen, welche in das äußere Rohr (3) eingebracht sind.

5. Türverstärkung nach Anspruch 4,
**dadurch gekennzeichnet**, **daß**
diese Zapfen (20) und die Langlöcher (30) an der Innenseite (EI) des Kraftfahrzeuges angeordnet sind.

6. Türverstärkung nach einem der Ansprüche 3 oder 4,
**dadurch gekennzeichnet**, **daß**
der Abschnitt des inneren Rohres (2), welcher in das äußere Rohr (3) eindringt, eine größere Länge aufweist, als die Langlöcher (30).

7. Türverstärkung nach Anspruch 3,
**dadurch gekennzeichnet**, **daß**
die den Anschlag bildenden Mittel aus einer Erweiterung (61) des inneren Rohres (6) bestehen, welche an einer Einschnürung (71) des äußeren Rohres (7) zum Anschlag kommt.

8. Türverstärkung nach einem der Ansprüche 2 bis 7,
**dadurch gekennzeichnet**, **daß**
das innere Rohr (2) und das äußere Rohr (3) mit Hilfe einer relativ langen Auflage (10; 8; 8''), oder mit Hilfe von zwei im Abstand angeordneten Auflagen (80, 81) miteinander zentriert werden.
